Europäisches Patentamt

European Patent Office

Office européen des brevets

(19)

(11) Publication number: **0 078 628**
**A1**

(12) # EUROPEAN PATENT APPLICATION

(21) Application number: **82305543.9**

(22) Date of filing: **19.10.82**

(51) Int. Cl.³: **B 29 D 23/12**

(30) Priority: **31.10.81 GB 8132857**

(43) Date of publication of application: **11.05.83**
**Bulletin 83/19**

(84) Designated Contracting States: **BE CH DE FR IT LI NL SE**

(71) Applicant: **DUNLOP LIMITED, Dunlop House Ryder Street St. James's, London SW1Y 6PX (GB)**

(72) Inventor: **Shuttleworth, Eric George, 22 Combe Park Road, Coventry West Midlands (GB)**

(74) Representative: **Waller, Roy Ernest Sykes et al, Group Patent Department Dunlop Limited 2 Parade, Sutton Coldfield West Midlands B72 1PF (GB)**

(54) **Production of a wound tubular product in continuous lengths.**

(57) The invention provides a method for producing tubular products such as pipes in continuous lengths by transversely deforming a strip (11) of material such as a thermoplastic around an internal support (10) so that its edges abut to form a tubular mandrel. Reinforcing material (20) is wound helically around the tubular mandrel which is arranged to be of slightly greater internal diameter than the support to enable it to be moved along the support.

EP 0 078 628 A1

PRODUCTION OF A WOUND TUBULAR PRODUCT IN
CONTINUOUS LENGTHS

This invention relates to the production of a
wound tubular product in continuous lengths.

Tubular products consisting solely of a polymeric
material such as natural or synthetic rubber or a plastics
material can be produced in any desired lengths by simple
extrusion. Larger tubes, particularly those containing
some form of reinforcement such as hose present a greater
problem and it has therefore been proposed, e.g. in
British Patent Specification No 1 086 744 to support the
extrusion internally until it has sufficiently solidified
by means of a cantilever mandrel the periphery of which is
made up of a plurality of endless conveyors. A similar
technique has been employed for the production of rubber
tube not by extrusion but by helically winding rubber
strip onto a mandrel and drawing the windings through a
curing oven over the mandrel; German Patent Specification
No 728 910 exemplifies this technique. U S Patent
Specification No 3 407 107 illustrates the use of an inner
liner which is internally supported by fluid pressure
during the winding process, and U S Patent Specification
No 3 068 134 illustrates an inner liner for a wound pipe
which is drawn along a mandrel whilst glass fibre strands
are wound spirally around it.

In recent years there has been increasing interest
in the production of rigid pipe which incorporates helically
wound flat metal strip. For example U S Patent
Specification No 3 189 054 discloses a high-strength,
light-weight pipe made by helically winding successive
layers of aluminium alloy and glass-fibre tape impregnated
with a resin. British Patent Specification No 1 407 913
represents an improvement in metal reinforced pipe in that
the helical windings of steel strip are embedded in a matrix
of polymeric material in such a way as to form a composite
structure. A preferred embodiment of the present invention
relates to the continuous production of a tubular body in
accordance with British Patent Specification No 1 407 913.

However the present invention is not limited to the production of tubular bodies reinforced by helical windings or metal strip but is applicable to the continuous production of any tubular body by a winding process or processes, for example the continuous production of pipe made by helically winding fibre-glass tapes.

Techniques which have been employed for the continuous production of filament-reinforced tubular products cannot be employed for the production of a tubular body incorporating inextensible helical windings, e.g. of metal strip, for a variety of reasons including the tendency of the windings to separate in the uncured product if subject to axial load (longitudinally of the body) and the relatively considerable torque applied to the mandrel by the winding or windings. For example, the techniques of U S Specification No 3769 127 or U S Patent Specification No 3 068 134 could not be employed because the wound product would have too great frictional resistance to removal longitudinally of the long fixed mandrel. Rigid pipes reinforced by helical windings of fibre-glass tape or flat metal strip have therefore, up till now, been manufactured in relatively short lengths determined by the length of the steel mandrel employed. The problems of jointing pipe of any description are well known, and thus the desirability of minimising such joints. Ideally joints would only be provided at an end or junction and a length of pipe (whether straight or slightly curved) would contain no joints. Pipe lengths to be assembled on site could be as long as is practicable for handling and transport purposes and ideally a long pipe would be made on site, for example being continuously laid from the rear of a vehicle travelling over a trench or other supports for the pipe being made or, in suitable cases, simply over flat ground (see e.g. U K Patent Specification No 707 354).

A principal object of the present invention is to make possible the production in continuous lengths of a tubular product incorporating at least one helically wound element, where the nature and construction of the product is such that it is not normally feasible continuously to pull it longitudinally off the mandrel on which it is built.

In accordance with one aspect of the present invention there is provided a method for the production in a continuous length of a tubular product comprising at least one helically wound element, the method comprising deforming a strip transversely of its length around an internal support to form a tubular mandrel onto which said element is wound while said mandrel is relatively moved longitudinally with respect to an element winding apparatus, the tubular configuration of the mandrel being maintained when said element is wound thereon by abutment of the longitudinal edges of the strip, and the internal dimensions of the tubular mandrel being slightly greater than the external dimensions of the support, the clearance therebetween reducing frictional resistance to relative movement of the mandrel and the support.

The strip may be deformed by passing it successively between shaping rollers on opposite sides of the support and through a sizing ring surrounding the support, thereafter the tubular body may be constructed on a tubular mandrel provided by a portion of the length of the deformed strip which surrounds the support and thereafter the deformed strip and the tubular body constructed thereon may be withdrawn from a free end of the support.

The said element may be in tape, ribbon or strip form, and may be of metal. The method may comprise winding a plurality of strips of metal onto the mandrel.

In accordance with another aspect of the present invention there is provided apparatus for carrying out the method described in any one of the three immediately preceding paragraphs, comprising means for helically winding a component of a tubular product and means for deforming a strip transversely of its length around an internal support with its longitudinal edges abutting to form a tubular mandrel having internal dimensions slightly greater than the external dimensions of the support, and

4. 0078628

moving means for relatively moving the mandrel longitudinally with respect to the winding means during winding of said component onto the mandrel.

Said deforming means may comprise a pair of shaping rollers and a sizing ring between and through which the strip is successively passed en route to the winding means.

The apparatus may comprise a support projecting cantilever fashion through the path of winding of the winding means and stationary with respect thereto, means for supplying the strip longitudinally toward the support in the region of the fixed end thereof and withdrawing means for drawing the deformed strip with the tubular product built thereon from the free end of the support.

The shaping rollers may be disposed on opposite sides of the support and the sizing ring may surround the support, the shapes and dimensions of the rollers and ring being such that the strip is deformed to a tubular configuration with internal dimensions slightly greater than the external dimensions of the support.

The withdrawing means may comprise location means engageable with a leading end of the strip and movable longitudinally of the support and means may be provided to prevent rotation of the location means relative to the support under torque applied to the deformed strip by the winding means.

The location means may comprise a collar adapted to surround and move longitudinally of the support, the collar having a trailing end portion insertable in and securable to a leading end of the deformed strip and lateral formations positioned to be engaged by abutments fixed relative to the support while the collar surrounds the support to prevent rotation of the collar relative to the support.

The withdrawing means may comprise traction means engageable with the location means to displace the latter away from the winding means off the free end of the support at a speed substantially equal to the speed of movement of the deformed strip toward the winding means.

The traction means may be guided to move substantially parallel with the support by guide means which changes the direction of movement of the traction means and is positioned in spaced relation to the free end of the support, said guide means being adjustable in height to be movable out of the path of the tubular product leaving the support.

Means may be provided to weld or fuse the seam formed by the abutted longitudinal edges of the deformed strip so that the latter forms a continuous tubular lining for the tubular product.

In accordance with yet another aspect of the present invention there is provided a tubular product comprising at least one helically wound element and an inner lining provided by a strip of material deformed transversely of its length so that the longitudinal edges of the strip abut to form a continuous longitudinal seam in the interior of the product.

Preferably said edges are in abutment and welded or fused together.

The strip is preferably of thermoplastic material.

For factory production using stationary plant the traction device will be pulled away from the fixed mandrel e.g. by a chain passing over sprockets. It is envisaged, however, that the apparatus could be mounted on a vehicle in which case the traction device could be in the form simply of an anchorage for the leading end of the formed tube. Movement of the vehicle away from the anchorage would provide the requisite traction of the mandrel over the support, the latter being fixed relative to the vehicle.

A preferred embodiment of the present invention will now be described with reference to the accompanying drawings, in which:-

Figure 1 is a schematic general arrangement view in side elevation of apparatus for carrying out the invention;

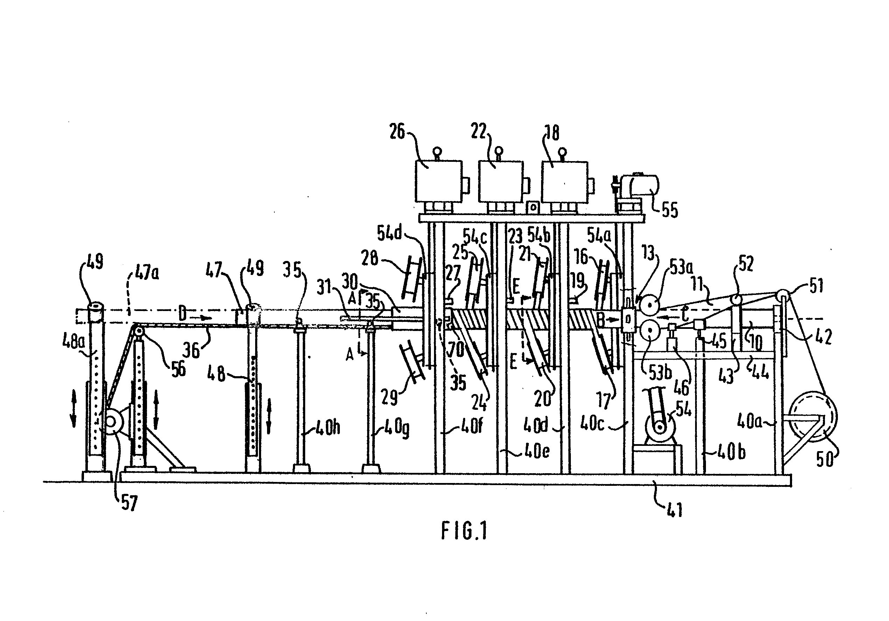

Figures 2 and 3 are detailed views on an enlarged
scale taken respectively in the direction
of the arrows C and B in Figure 1;
Figure 4 is a view on an enlarged scale taken
on the line E-E of Figure 1;
Figures 5 and 6 are views on an enlarged scale
taken respectively on the line A-A of
Figure 1 and in the direction of the
arrow D;

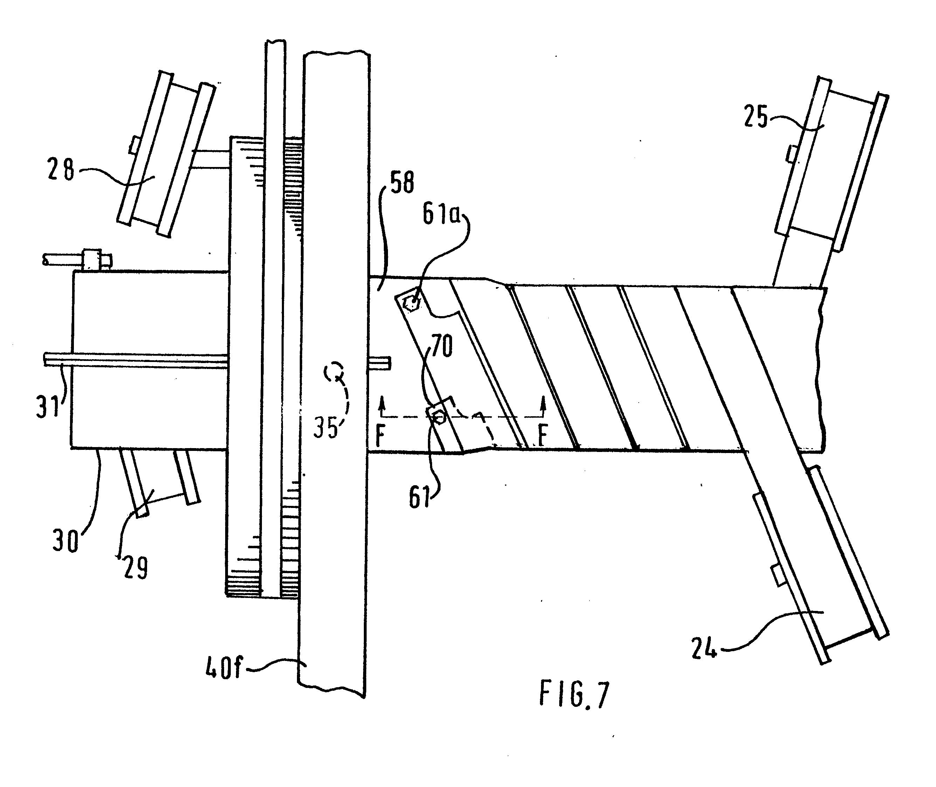

Figure 7 is a side view on an enlarged scale
showing part of the apparatus of Figure
1, and

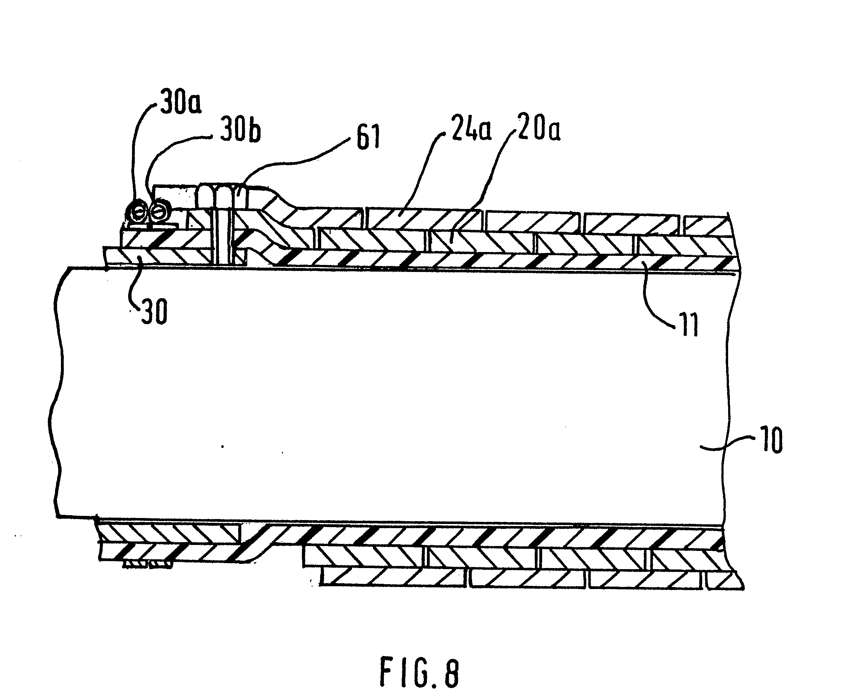

Figure 8 is a partly cross-sectional view of a
detail of Figure 7, taken on the line F-F.

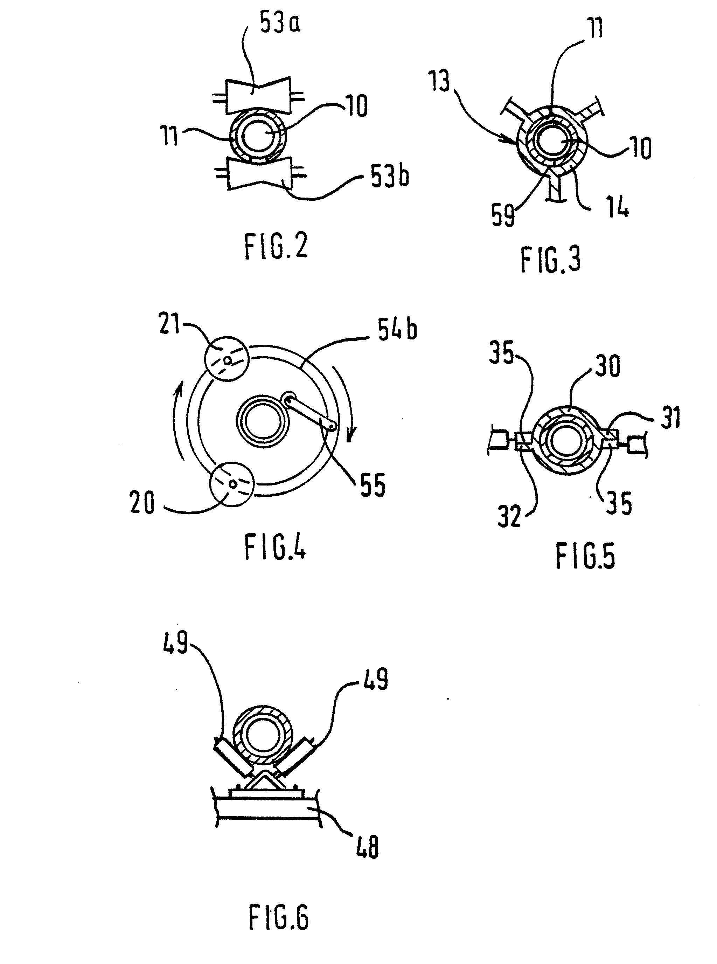

The apparatus illustrated in Figure 1 comprises a
framework including uprights 40 mounted on a base 41.
The shorter uprights 40a and 40b carry cantilever fashion
one end of a cylindrical steel support 10 by means of
clamps 42 and 43, the latter mounted on a horizontal
member 44 of the frame, and additional supporting saddles
45 and 46 respectively at the upper end of the upright 40b
and on the horizontal member 44. The opposite, or free
end of the support 10 is temporarily upheld by a steady 48
which, as viewed in Figure 6, has a V-formation of freely
rotatable rollers 49 but the steady 48 is vertically
adjustable away from the support 10 for purposes which will
be described.

On the end upright 40a of the frame is rotatably
mounted a supply spool 50 for a strip 11 of polyethylene,
which is 1.5 millimetres in thickness and 323.58 millimetres in
width, and is led over free running rollers 51 and 52 above
the clamps 42 and 43 to a pair of waisted rollers 53a, 53b
synchronously driven by a motor 54. The effect of driving
the leading end of the strip 11 between the rollers 53a
and 53b is to wrap it transversely of its length about the
support 10, which has a diameter of 100 millimetres,
generally to the inverted "C" shape shown in Figure 2.
After passing between the rollers 53a, 53b the leading end

7.

0078628

of the strip 11 passes through a sizing bush 13 fixed relative to the upright 40c. This comprises a steel ring 14 internally lined with PTFE (polytetrafluoroethylene), the diameter of the lining determining the final shape of the strip 11 which, having the dimensions mentioned above and as can be seen from Figure 3, becomes a closed tube of internal diameter slightly greater than the external diameter of the support 10, i.e. having a diameter 1.5 millimetres greater than that of the support when its longitudinal edges abut.

The leading end of the strip 11 now passes coaxially through the first of four ring supports 54a, 54b, 54c and 54d which are respectively supported by the uprights 40c, 40d, 40e and 40f for rotation relative thereto about axes coincident with that of the support 10, each being driven by a respective motor only one, 55, of which, driving the ring 54a, is shown for the sake of simplicity. All of the rings 54a, 54b, 54c and 54d are rotated in the same sense indicated by the arrows in Figure 4 in the case of the ring 54b, i.e. clockwise as viewed from the free end 47 of the support 10. The ring 54a carries spools 16 and 17, the ring 54b spools 20 and 21, the ring 54c spools 24 and 25 and the ring 54 spools 28 and 29 all of which are rotatable relative to the rings on which they are mounted, to wind, under suitable frictional resistance, different components of the composite tubular body to be formed around the support 10 in a predetermined sequence. In addition, applicators 19, 23 and 27 are mounted respectively on the uprights 40d, 40e and 40f to supply liquid components from reservoirs 18, 22 and 26 to the composite body. Liquids discharged from the heads 19, 23 and 27 are distributed circumferentially around the composite body by rollers held in contact with the body by arms extending inwardly of the rings 54b, 54c and 54d, one (only) of such spreader arms and roller being indicated at 55 in the case of the ring 54b in Figure 4. As an alternative to the liquid applicators illustrated the tubular body may pass through sleeves (not shown) respectively

8.                              0078628

fixed relative to the uprights 40d, 40e and 40f, each sleeve having an annular groove in its inner periphery communicating with the respective reservoir 18, 22 or 26. The sleeves may also have internal seals (not shown) to prevent liquid under pressure in the groove thereof running oppositely to the direction of movement of the body.

A collar 30 is movable longitudinally of the mandrel 10 by a chain 36 passing over a sprocket 56 to a drum 57 rotated by a motor (not shown) so that the collar 30 will move from right to left as viewed in Figure 1 at the same speed as the strip 11 is fed in the same direction by the rollers 53a, 53b. The collar 30 has lateral flanges 31 and 32 which extend the full length of the collar 30 and for a distance from its leading end approximately equal to the length of the collar. This arrangement ensures that throughout the travel of the collar 30, from the commencement of the winding operation until the integrity of the cured composite makes it unnecessary, the flange 31 is engaged by at least one roller 35 beneath it and the flange 32 is engaged by at least one roller 35 above it, pairs of the freely rotatable rollers 35 being in opposed relation at the top of the uprights 40g and 40h of the frame, and at a similar height on the upright 40f.

At the commencement of the operation the collar 30 is positioned as far as possible to the right as viewed in Figure 1 with the left-hand ends of its flanges 31 and 32 contacted by the rollers 35 on the upright 40f. At its right-hand or trailing end the collar 30 has a portion 58 which enters the leading end of the mandrel produced by the wrapped strip 11 when this reaches it, having passed through the ring 54a and as it enters the ring 54b. The strip 11 is secured in position on the collar 30 by means of two worm drive clips 30a, 30b. During passage between the rings 54a and 54b first a strip of melamine is helically wound onto the mandrel from the spool 16 and then a strip of fibre-glass from the spool 17, the fibre-glass strip being soaked in a first component of an acrylic composition. A second component of the acrylic composition is then applied to the wound fibre-glass tape by the applicator head 19 and spread by the spreader 55. The thickness and strength of the mandrel strip 11 is such that the torque applied to it by the tapes from the spools 16 and 17 does not collapse the mandrel into frictional engagement with the support 10 but maintains the circular cross-sectional configuration of the mandrel by abutment between its longitudinal edges. Due to the width of strip 11 being greater than the circumference of support 10 a clearance is maintained between the support 10 and the mandrel facilitating their relative longitudinal movement.

When the collar end 58 is received in the mandrel, now coated with a corrosion-resistant, curable resinous lining, the mandrel and the leading end of a flat steel strip drawn from the spool 20 are secured by a screw 61 passing through the mandrel and its coating to engage a tapped hole in the collar extension 58. As can be seen in Figure 1 and Figure 7 the leading end of the strip is cut away to form a tongue 70 which can swivel about the screw 61 to allow the steel strip to adopt a helical disposition without buckling. The reel 57 is now rotated to draw the collar 30 to the left as viewed in Figure 1 at the same time as the mandrel is advanced by the rollers 53a and 53b. As the collar 30 is drawn to the left as viewed in Figure 1 the ring 54b is rotated so that the steel strip is helically wound over the resin-coated mandrel to form a layer 20a. To produce the structure described in British Patent Specification No 1 407 913 the speed of longitudinal movement of the collar 30 is related to the speed of rotation of the ring 54b in such a way that adjacent turns of the steel strip from the spool 20 are spaced. At the same time a strip of fibre-glass soaked in a first component of an acrylic resin is wound over the steel strip from the spool 21 and a second component of the resin from the reservoir 22 is applied over the fibre-glass strip from the applicator head 23 as the composite body moves through the ring 54c which, on rotation, spreads the liquid from the applicator head 23 around the composite body.

Having reached the left-hand side of the ring 54c the collar 30 is halted (the rollers 53a and 53b being simultaneously halted) while the leading end of a second steel strip from the spool 24 is screwed to the collar extension 58 by a screw 61a in a manner similar to that in which the strip from the spool 20 was previously screwed. The drum 57 and the rollers 53a and 53b are now started up again and the rings 54a, 54b, 54c and 54d rotated so that steel from the spool 24 is helically wound over the resin layer of the first steel winding and in an overlapping relation to the latter in accordance with the teachings of British Patent Specification No 1 407 913, to form a layer 24a. A fibre-glass strip soaked in a first component of an acrylic composition is helically wound over the second steel strip from the spool 25 and a second component of the acrylic composition is applied over it from the applicator head 27 fed from the reservoir 26. A roller within the ring 54d (not shown) on the end of a spreader arm resembling the arm 55 of Figure 4 spreads the second component of the resinous composition around the wound body and then as the collar 30 moves away from the ring 54d first a strip of textile in the form of chopped strand mat is helically wound over the composite by the spool 28 and finally a layer of melamine from the spool 29 is wound over the textile mat to prevent air penetration to the resinous composition.

To allow the collar 30 to pass over it the steady 48 is dropped, i.e. adjusted vertically downward, and if necessary at this time the free end of the support 10, extended as shown in dotted lines to the position 47a, may be supported by a second collapsible steady 48a on the far side of the sprocket 56. It will be observed that until the flanges 31 and 32 leave the rollers 35 at the top of the upright 40h to the left as viewed in Figure 1 the collar 30 is still restrained against rotation under the torque applied to the composite body by the various strips wound onto it during its formation, in particular the steel strips from the spools 20 and 24. The rings 54b and 54c rotate in the same sense so that the steel strips are in the overlapping relation taught in British Patent Specification No 1 407 913 and so that there are no interstices in the finished composite where there is no metal in the radial direction.

The speed of movement of the collar 30 is so calculated that by the time the flanges 31 and 32 leave the last rollers 35 on the upright 40h the resinous matrix in which the two steel layers are embedded in the leading end of the composite will have cured so that the rigidity of the composite itself is sufficient to prevent rotation or distortion of the rigid composite pipe being formed behind it. Once the collar 30 has passed over the collapsible steady 48 this can be raised again this time to support not the support 10 but the (now rigid) tubular composite surrounding the support.

A leading end portion of the composite nearest to the collar 30 may be imperfect due to some misalignment of the two steel strips caused by the necessity to stop and re-start the machine to screw the leading ends of the strips to the collar extension 58. In this case once a sufficient length of the composite had been drawn off the support 10, its rigidity and inertia fulfilling the purpose of the flanges 31 and 32 on the collar 30, the leading end portion of the composite can be sacrificed, thereby removing the collar 30 preparatory to re-use. In place of the traction device represented by the reel 57 an alternative means such as a conveyor may be utilised to carry the finished composite away from the installation represented by the uprights 40a to 40f. Alternatively the installation illustrated may itself be mobile and the necessary traction may be applied to the finished composite by moving the installation from left to right as viewed in Figure 1 away from a fixed anchorage point (not shown) for the finished composite. Once a sufficient length of the finished composite tube or pipe has been laid, e.g. on the ground, its own resistance to movement may make a fixed anchorage unnecessary.

It will be seen that the technique as described results in a rigid composite pipe with an inner lining of polyethylene with a seam 59 where the longitudinal edges of the mandrel strip are in abutment. The polyethylene mandrel is shielded from the inner lining of resin by an initial layer of melamine from the spool 16 which facilitates withdrawal of the mandrel from the finished product if this is desired. Alternatively if it is desired that the finished product should have an inner lining of polyethylene it is desirable that the seam 59 should be sealed and the the polyethylene should be adhered to. the inner resin lining. The latter can be achieved by omitting the melamine layer from the spool 16 and sealing of the seam 59 can be achieved by positioning a suitable welding gun (e.g. a jet of hot air or a hot rod) immediately in front of the sizing bush 13 so that as the lateral edges of the polyethylene strip are brought into abutment they are welded together.

The material from which the strip 11 is made as described above is polyethylene which has been found to bend sufficiently easily to circular shape and yet to have sufficient rigidity to withstand the pressure of the metal strip windings and thus to maintain the required gap around the support 10. Other materials such as polyurethane may be used instead of polyethylene provided that they posses these required functional properties. The thickness of the strip 11 (1.5 millimetres) is chosen to provide firm abutment of the longitudinal edges without the danger of overlap whilst being sufficiently thin to permit the strip 11 to be formed from flat sheet into a tube of true circular cross-section.

By the provision of a narrow gap between the inner surface of the tubular mandrel and the outer surface of the support it has been found to be possible to ensure free movement of the composite tube or pipe through the winding apparatus. Still further improvement in the reduction of friction could be obtained by the use of lubricants or by the introduction of compressed air, through a plurality of small holes in the cylindrical surface of the support 10, into the gap between the support and the tubular mandrel.

14.                                    0078628

CLAIMS:

1.      A method for the production in a continuous length of a tubular product comprising at least one helically wound element, <u>characterised in that</u> a strip (11) is deformed transversely of its length around an internal support (10) to form a tubular mandrel (11) onto which said element (16,17,20,21,24,25,28,29) is wound while said mandrel is relatively moved longitudinally with respect to an element winding apparatus (54<u>a</u>-<u>d</u>), the tubular configuration of the mandrel being maintained when said element is wound thereon by abutment (59) of the longitudinal edges of the strip, and the internal dimensions of the tubular mandrel (11) being slightly greater than the external dimensions of the support (10), the clearance therebetween reducing frictional resistance to relative movement of the mandrel and the support.

2.      A method as claimed in claim 1 <u>characterised in that</u> the strip (11) is deformed by passing it successively between shaping rollers (53<u>a</u>,53<u>b</u>) on opposite sides of the support and through a sizing ring (13) surrounding the support, thereafter the tubular body is constructed on a tubular mandrel provided by a portion of the length of the deformed strip (11) which surrounds the support and thereafter the deformed strip and the tubular body constructed thereon are withdrawn from a free end of the support.

3.      A method as claimed in either of the preceding claims <u>characterised in that</u> the said element (16,17,20,21, 24,25,28,29) is in tape, ribbon or strip form.

4.      A method as claimed in claim 3, <u>characterised in that</u> the said element (20,24) is of metal.

5.      A method as claimed in claim 4 <u>characterised in that</u> a plurality of strips (20,24) of metal are wound onto the mandrel.

6.      Apparatus for carrying out the method claimed in any one of the preceding claims, comprising means for helically winding a component of a tubular product and means for deforming a strip transversely of its length around an internal support <u>characterised in that</u> the

apparatus is arranged to cause the longitudinal edges of the strip to abut to form a tubular mandrel (11) having internal dimensions slightly greater than the external dimensions of the support (10), and moving means (30,36) for relatively moving the mandrel longitudinally with respect to the winding means (54a-d) during winding of said component onto the mandrel.

7.     Apparatus as claimed in claim 6 <u>characterised in that</u> the deforming means comprises a pair of shaping rollers (53a, 53b) and a sizing ring (13,14) between and through which the strip (11) is successively passed <u>en route</u> to the winding means.

8.     Apparatus as claimed in claim 6 or claim 7 <u>characterised in that</u> it comprises a support (10) projecting cantilever fashion through the path of winding of the winding means (54a-d) and stationary with respect thereto, means (50) for supplying the strip longitudinally toward the support in the region of the fixed end thereof and withdrawing means (30,36,57) for drawing the deformed strip with the tubular product built thereon from the free end of the support.

9.     Apparatus as claimed in claim 8 as appendant to claim 7 <u>characterised in that</u> the shaping rollers (53a,53b) are disposed on opposite sides of the support (10) and the sizing ring (13,14) surrounds the support, the shapes and dimensions of the rollers and ring being such that the strip (11) is deformed to a tubular configuration with internal dimensions slightly greater than the external dimensions of the support.

10.     Apparatus as claimed in claim 8 or claim 9, <u>characterised in that</u> the withdrawing means (30,36,57) comprises location means (30,30a,30b) engageable with a leading end of the strip (11) and movable longitudinally of the support and wherein means (31,32,35) is provided to prevent rotation of the location means (30) relative to the support (10) under torque applied to the deformed strip by the winding means.

11.     Apparatus as claimed in claim 10 <u>characterised in</u>

that the location means comprises a collar (30) adapted to surround and move longitudinally of the support (10), the collar (30) having a trailing end portion (58) insertable in and securable to a leading end of the deformed strip (11) and lateral formations (31,32) positioned to be engaged by abutments (35) fixed relative to the support while the collar surrounds the support to prevent rotation of the collar relative to the support.

12.　　Apparatus as claimed in claim 10 or claim 11, characterised in that the withdrawing means (30,36,57) comprises traction means (36,57) engageable with the location means to displace the latter away from the winding means (54a-d) off the free end of the support (10) at a speed substantially equal to the speed of movement of the deformed strip towards the winding means.

13.　　Apparatus as claimed in claim 12 characterised in that the traction means (36) is guided to move substantially parallel with the support by guide means (56) which changes the direction of movement of the traction means (36) and is positioned in spaced relation to the free end of the support, said guide means (56) being adjustable in height to be movable out of the path of the tubular product leaving the support (10).

14.　　Apparatus as claimed in claim 9, or any one of claims 10-13 as appendant to claim 9, characterised by the provision of means to weld or fuse the seam (59) formed by the abutted longitudinal edges of the deformed strip (11) so that the latter forms a continuous tubular lining for the tubular product.

15.　　A tubular product characterised in that it comprises at least one helically wound metal strip element (20,24) and an inner lining (11) provided by a strip of material deformed transversely of its length so that the longitudinal edges of the strip abut to form a continuous longitudinal seam (59) in the interior of the product.

16.　　A tubular product as claimed in claim 15, characterised in that said edges are welded or fused together.

17.     A tubular product as claimed in claim 15 or claim 16 <u>characterised in that</u> the strip (11) is of thermoplastic material.

FIG.1

FIG.2

FIG.3

FIG.4

FIG.5

FIG.6

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 29 D 23/12 |
| Y | US-A-3 407 107 (SKOGGARD) *The whole document; especially columns 3-5; figures 1,2* | 1,6,8 | |
| | --- | | |
| Y,D | US-A-3 068 134 (CILKER) *The whole document* | 1,6,8, 14 | |
| | --- | | |
| Y | GB-A- 697 337 (BRITISH CELANESE) *Claim 9; page 2, lines 13-36* | 1,2,6- 9 | |
| | --- | | |
| Y | US-A-3 066 461 (MEISSNER) *Column 5, lines 44-57; figures 1,6* | 1,6 | |
| | --- | | **TECHNICAL FIELDS SEARCHED (Int. Cl. ³)** |
| A | GB-A- 733 821 (FLEURY) *The whole document* | 1,3,4, 6,8,14 ,15 | B 29 D |
| | --- | | |
| A | US-A-3 740 207 (BOGRETS) | | |
| | ----- | | |

The present search report has been drawn up for all claims

| Place of search THE HAGUE | Date of completion of the search 17-02-1983 | Examiner WELSCH H.R. |
|---|---|---|